# EUROPÄISCHE PATENTSCHRIFT

(11) **EP 3 470 972 B1**
(45) Veröffentlichungstag und Bekanntmachung des Hinweises auf die Patenterteilung: **02.03.2022**
(21) Anmeldenummer: 17196266.5
(22) Anmeldetag: 13.10.2017
(51) Int. Cl.: G06F 3/12, B41M 5/00

(54) **VERFAHREN ZUR MEHRFACHNUTZUNG DIGITALER DRUCKDATEN ZUR ERZEUGUNG OPTISCH UND/ODER HAPTISCH HOCHWERTIGER DRUCKDEKORE AUF EINEM TRÄGERMATERIAL**
METHOD FOR THE REPEATED USE OF DIGITAL PRINT DATA FOR GENERATING OPTICALLY AND/OR HAPTICALLY HIGH VALUE PRINTED DECORATIONS ON A SUBSTRATE
PROCÉDÉ D'UTILISATION MULTIPLE DE DONNÉES D'IMPRESSION NUMÉRIQUE PERMETTANT DE FABRIQUER DES DÉCORS IMPRIMÉS DE HAUTE QUALITÉ OPTIQUE ET/OU HAPTIQUE SUR UN MATÉRIAU DE SUPPORT

(43) Veröffentlichungstag der Anmeldung: 17.04.2019
(73) Patentinhaber: Flooring Technologies Ltd., Kalkara SCM1001 (MT)
(72) Erfinder: KALWA, Norbert, 32805 Horn-Bad Meinberg (DE)
(74) Vertreter: Maikowski & Ninnemann Patentanwälte Partnerschaft mbB

(56) Entgegenhaltungen:
- EP-B1- 3 020 565
- DE-A1-102016 212 699

## Beschreibung

Die vorliegende Erfindung betrifft ein Verfahren zur Mehrfachnutzung digitaler Druckdaten nach Anspruch 1 und eine Vorrichtung zur Durchführung dieses Verfahrens nach Anspruch 9.

### Beschreibung

Mit einem Dekor versehene Holzwerkstoffplatten werden häufig zur Herstellung von Fußbodenlaminat oder in Form von Wand- und Deckenverkleidungselementen verwendet. Zur Dekorierung der Holzwerkstoffplatten gibt es mehrere Ansätze. So besteht eine Möglichkeit in der Beschichtung von Holzwerkstoffplatten mit einem Dekorpapier, wobei der Vielfältigkeit an verschiedengemusterten Dekorpapieren keine Grenzen gesetzt sind.

Als Alternative zur Verwendung von Dekorpapieren auf Holzwerkstoffplatten entwickelt sich zunehmend die Möglichkeit des direkten Bedruckens von Holzwerkstoffplatten, wobei ein Bedrucken von Papier und dessen nachträgliches Kaschieren oder Direktbeschichten auf die Holzwerkstoffplatten entfällt.

Die hierbei neben dem herkömmlichen Tiefdruckverfahren neuerdings zum Einsatz kommende Drucktechnik ist das Digitaldruckverfahren. Beim Digitaldruck wird das Druckbild direkt von einem Computer über einen Digitaldrucker, wie z.B. einen Laserdrucker oder Tintenstrahldrucker, auf ein Trägermaterial übertragen.

Mit Hilfe von Digitaldruckern können beliebige Vorlagen nach Digitalisierung auf die verschiedensten Trägermaterialien (Papier, Kunststoff, Metall, Holzwerkstoffe usw.) aufgebracht werden. Digitaldruckverfahren unterliegen nicht mehr Einschränkungen des Tiefdruckverfahrens, wie Dekorwiederholung und Dekorausarbeitung, sondern bieten flexible Möglichkeiten bei der Individualisierung von Dekoren, wie z.B. durch Farbveränderungen, geometrische Operationen (Spiegelung, Drehung usw.), Größenänderungen der Dekore, manuelle Bearbeitung der Dekore vor dem Druck usw. Auch das Abbilden von komplizierten Dekoren, wie z.B. von Intarsien ist möglich.

Der Digitaldruck ermöglicht die Herstellung eines Druckbildes mit besonders hoher Qualität durch eine höhere Auflösung und erlaubt des Weiteren ein breiteres Anwendungsspektrum bei hoher Flexibilität. Neben diesen dekorativen Möglichkeiten ist die einfache Erzeugung auch von kleineren Losgrößen ein wesentlicher Vorteil des Digitaldruckverfahrens.

Der Nachteil erhöhter Kosten der digitalen Drucktechnologie pro Druck, insbesondere im Vergleich mit konventionellen Druckverfahren wie dem Tiefdruckverfahren, tritt dabei in den Hintergrund. Trotz der zahlreichen Vorteile bleiben vielfältige Möglichkeiten des Digitaldruckverfahrens derzeit ungenutzt. Die erzeugten digitalen Daten werden lediglich einmal für den Druck des Dekors auf ein entsprechendes Trägermaterial verwendet. Die wiederholte Nutzung der digitalen Daten bei der sich anschließenden Weiterverarbeitung der bedruckten Trägermaterialien ist derzeit nicht vorgesehen. Die sich an den Druck anschließenden Verfahrensschritte und darin eingesetzte Vorrichtungen sind zudem nicht immer dafür ausgelegt, die digitalen Daten zu nutzen. Unter Verwendung der vorhandenen digitalen Daten wäre es möglich, mit oder ohne Berücksichtigung der Eigenschaften der Trägermaterialien, in sich an den Digitaldruck anschließenden Veredelungsschritten höherwertige Produkte zu erzeugen, die optisch und/oder haptisch verbesserte Druckdekore aufweisen. Solche Veredelungsschritte umfassen unter anderem das Erzeugen von Farb- und Glanzvariationen, das Erzeugen von an das Dekor angepassten Oberflächenstrukturierungen mit oder ohne Presse sowie Verbesserungen bei der Weiterverarbeitung der bedruckten Trägermaterialien.

Ein möglicher Ansatz zur Lösung dieses Problems wird in der EP 1 242 702 B2 vorgestellt.

Das beschriebene Verfahren umfasst die Verwendung von Teilen der digitalen Daten zusammen mit Hilfsprogrammen zum Steuern von weiteren Schritten bei der Herstellung von Fußbodenelementen, wie beispielsweise beim Identifizierungs-Markieren, Verpacken, Lackieren, Strukturieren von Oberflächen, Aufbewahren und in der Versandlogistik. Aus der EP 1 242 702 B2 geht jedoch nicht hervor, welche Dekordaten und welche Unterstützungsprogramme verwendet werden können.

In der EP 3 020 565 B1 wird zumindest eine Zweitnutzung von digitalen Druckdaten offenbart. Das beschriebene Verfahren umfasst die Verwendung der für den Digitaldruck von Dekoren auf Fußbodenelemente erzeugten Daten zur Herstellung von Druckwalzen für das Tiefdruckverfahren. Diese Nutzungsart dient allerdings nicht der Weiterbildung des

Digitaldruckverfahrens selbst bzw. nachgelagerter Prozessschritte bei der Weiterverarbeitung digital bedruckter Trägermaterialien.

Die DE 10 2016 212699 A1 offenbart ein Druckverfahren, welches mehrere Durchläufe eines Druckmediums durch einen Drucker unterstützt und somit auch die Erzeugung eines Strukturierungs- oder 3D-Effekts durch das selektive Drucken einer klaren Tinte über bestimmten Bereichen eines Farbbilds erlaubt.

Bei der Bereitstellung von digitalen Daten für die Erzeugung von dekorativen Oberflächen für unterschiedliche Produkte wie Möbel, Fußboden, Paneele, Wandverkleidungen, Fassaden und anderer Bedarfsgegenstände werden zunächst Vorlagen bzw. Motive von verschiedenster Herkunft bereitgestellt. Diese können je nach Bedarf aus unterschiedlichen Quellen stammen. So können zum einen natürliche Produkte wie Holz oder Stein genutzt werden oder zum anderen können auch andere Vorlagen verwendet werden, die durch weitere Drucktechniken wie dem Tiefdruck, Siebdruck oder auch mittels manueller Herstellung erzeugt wurden. Diese Vorlagen werden anschließend unter Verwendung eines Scanners digitalisiert, wobei die heutzutage zum Einsatz kommenden Scanner in der Lage sind, großformatige Vorlagen in einem Scan zu digitalisieren.

Während des Scanvorganges können durch die Verwendung von speziellen Beleuchtungstechniken und die Variation der Position des Scannerkopfes über der Vorlage in bereits diesem Schritt spezielle Effekte wie Schattierungen erzeugt werden. Die Vorlage wird während des Scannens üblicherweise mit einer Auflösung zwischen 300 bis 1.200 dpi oder neuerdings auch mit höherer Auflösung zwischen 1.200 und 2.400 dpi eingescannt. Die nach dem Scannen vorliegende Datei (z.B. im RGB-Format) kann anschließend in einem Bearbeitungsschritt mit einer geeigneten Software (wie z.B. Photoshop, Paint Shop Pro und andere) bearbeitet werden, wobei neben dem gewünschten Format auch das gespeicherte Bild als solches verändert werden kann.

So können z.B. Details der Vorlage modifiziert, ergänzt oder entfernt werden. Im Falle eines Holzdekores können dabei z.B. Astlöcher hinzugefügt, entfernt oder in ihrer Größe und im Aussehen verändert werden. Darüber hinaus ist es auch möglich, geometrische Operationen wie Drehungen, Spiegelungen oder auch eine Umgruppierung bestimmter Teile der Datei zueinander vorzunehmen.

Neben diesen möglichen Modifizierungen sind auch Farbanpassungen in einem bestimmten Umfang möglich. Allerdings sind generelle Farbänderungen z.B. von schwarz nach weiß bisher nicht möglich. Ein weiterer Nachteil ist, dass bei der Farbanpassung keine unabhängige Farbänderung möglich ist, d.h. z.B. im Falle einer gewünschten Farbvertiefung von Holzporen in einem Holzdekor werden auch andere Dekordetails mit beeinflusst.

Zur Anwendung im Digitaldruck wird die so überarbeitete Datei in einem weiteren Prozess (Raster imaging process, RIP) in ein auf einem digitalen Ausgabegerät verarbeitbarem Format umgerechnet. Hier liegt die Datei typischerweise in Form einer TIFF-Datei vor.

Die Ausgabe des digitalen Drucks erfolgt derzeit fast ausschließlich unter Verwendung des Farbsystems CMYK. Das CMYK-Farbmodel ist ein subtraktives Farbmodel, wobei die Abkürzung CMYK für die drei Farbbestandteile Cyan, Magenta, Yellow und den Schwarzanteil Key als Farbtiefe steht. Mit diesem Farbsystem lässt sich ein Farbraum (Gamut) abbilden, der vielen Anforderungen aus verschiedensten Bereichen genügt. Trotzdem ist der CMYK-Farbraum ein Kompromiss, der dazu führt, dass bestimmte Farben entweder gar nicht erzeugt werden können oder dazu dann doch der Einsatz zusätzlicher Farben nötig wird. Dieses Problem stellt sich besonders dort, wo beim Druck sehr viele leicht grüne, dunkelblaue und dunkelrote Töne erzeugt werden müssen, wie bei der Reproduktion von Holzdekoren in der Möbel- oder Laminatbodenindustrie.

Die skizzierten Verfahren weisen insbesondere Nachteile bei Farbveränderungen auf. So führt die Veränderung einer Farbe zwangsläufig auch zu Änderungen bei anderen Farben. Zudem bleibt ein großer Teil des Potenzials der Digitaldrucktechnologie, vor allem in Bezug auf die Nutzung der digitalen Daten zur Verbesserung des haptischen und/oder optischen Erscheinungsbildes der Dekore und in nachgeordneten Verfahrensschritten bei der Weiterberarbeitung der Trägermaterialien, immer noch ungenutzt.

Trotz der genannten Nachteile besteht ein großer Bedarf daran, das Erscheinungsbild von mittels Digitaldruck erzeugten Dekoren weiter aufzuwerten, z.B. durch das Aufbringen von dekorangepassten Strukturierungen und durch die maßgenschneiderte Gestaltung von Oberflächen.

Die der Erfindung zu Grunde liegende technische Aufgabe besteht daher darin, ein Verfahren zur Erzeugung optisch und/oder haptisch hochwertiger Druckdekore auf einem Trägermaterial bereitzustellen.

Insbesondere soll ein Ablauf entwickelt werden, welcher die mehrfache Nutzung digitaler Druckdaten ermöglicht, sodass mittels zusätzlicher Verfahrensschritte optische und/oder haptische Effekte erzeugt werden, die zu einer eine Aufwertung der mittels Digitaldruck erzeugten Dekore auf einem Trägermaterial führen.

Diese Aufgabe wird erfindungsgemäß durch ein Verfahren mit den Merkmalen des Anspruchs 1 und eine Vorrichtung zur Durchführung dieses Verfahrens mit den Merkmalen des Anspruchs 9 gelöst.

Entsprechend wird ein Verfahren zur Mehrfachnutzung digitaler Druckdaten zur Erzeugung optisch und/oder haptisch hochwertiger Druckdekore auf einem Trägermaterial bereitgestellt. Das vorliegende Verfahren verwendet demnach einen elektronischen Datensatz mit hoher Auflösung zur Steuerung eines Digitaldruckers als auch zur mehrfachen Verwendung bei der Weiterbearbeitung des bedruckten Trägermaterials. Darüber hinaus erfolgt mit dem vorliegenden Verfahren eine digitale Separierung der Farbinformationen des Druckmotives; die verschiedenen Dekor- bzw. Motivstrukturen werden farblich zerlegt. Dabei wird je nach der gewünschten Anzahl an Ausgabefarben jeweils ein separater Farbkanal erzeugt und gespeichert. In diesen Farbkanälen sind neben den Farbinformationen auch die dazugehörigen Dekorinformationen gespeichert. Die in den Farbkanälen getrennt vorliegenden Farbinformationen können dann unabhängig voneinander in den einzelnen Kanälen verändert und bearbeitet werden, ohne dass die Farbinformationen in den anderen Kanälen ebenfalls einer Veränderung unterliegen.

Die mit einer geeigneten Software, wie zum Beispiel einem Graphikprogramm wie Photoshop erzeugte farbliche Aufspaltung des Dekors dient als Vorlage für den Digitaldruck. Die Separation der Farbinformationen eines elektronischen Datensatzes dient somit als Vorlage für das Digitaldruckverfahren. Gleichzeitig sind im Digitaldruck eine Vielzahl von Farb- und Strukturvariationen an die einzelnen, separierten Farbbestandteile, wie z.B. an die dunkelste Farbe "Key" (=Schwarz) gekoppelt. Durch den Digitaldrucker und dessen Wegstreckenmessung ist es möglich, die Positionierung der separierten Farbbestandteile beim Erzeugen des Druckdekors auf dem Trägermaterial, d.h. des gedruckten Dekors genau zu ermitteln und als Positionsdaten zu speichern. Diese Positionsdaten können bis zum Fertigprodukt an den bedruckten Träger gekoppelt durch die Fertigung geschleust werden. Dadurch wird ermöglicht, dass während des Digitaldrucks oder in auf den Digitaldruck des Dekors folgenden Verfahrensschritten positionsgenaue Variationen der farbigen Anmutung und der Oberflächenstruktur vorgenommen werden können, die mit dem gedruckten Dekor deckungsgleich sind.

In der Möbelindustrie und der Laminatherstellung werden durch die Druckdekore sehr häufig Holzmaserungen oder andere natürliche Produkte, wie beispielsweise Stein, interpretiert. Es besteht dabei die Anforderung, die natürlichen Vorlagen möglichst naturgetreu nachzubilden, und zwar sowohl farblich als auch haptisch. Eine optische Aufwertung der gedruckten Dekore kann mit dem erfindungsgemäßen Verfahren dadurch erreicht werden, dass bestimmte Farbanteile, wie zum Beispiel der Farbanteil Key, in größerer Menge auf das Trägermaterial aufgetragen wird als andere Farben. Ein Vorteil des vorliegenden Verfahrens ist der, dass beliebige Farben erzeugbar sind, die Farbkanäle einzeln bearbeitet werden können und Sonderfarben als separate Kanäle gespeichert werden können. Eine weitere Möglichkeit der optischen Aufwertung eines Dekors mit dem erfindungsgemäßen Verfahren besteht demnach im positionsgenauen Druck von Sonderfarben, beispielsweise in eine vorhandene gedruckte Holzmaserung.

Die haptische Aufwertung der Dekore kann mit dem erfindungsgemäßen Verfahren auf zwei Wegen erreicht werden. Zum einen ist es möglich, eine Oberflächenstrukturierung durch Aufdrucken von Tinten, wie z.B. UV-Tinten oder wässrigen Tinten, vorzugsweise UV-Tinten zu erreichen, wobei die mit den UV-Tinten zu bedruckenden Positionen auf dem Trägermaterial der Maserung des Dekors folgen. Zum anderen ist es mit dem erfindungsgemäßen Verfahren möglich, auf mechanische Art und Weise, beispielsweise mittels einer Kurztaktpresse, eine Oberflächenstrukturierung zu erzielen, die mit der Maserung des gedruckten Dekors deckungsgleich ist.

Das vorliegende Verfahren ermöglicht zudem die Herstellung eines Probenmusters mit einem bestimmten Dekor, hergestellt im Digitaldruck, welches Kunden vorgestellt werden kann und nach Kundenzustimmung zu dem Druckdekor eine Überführung in die Massenproduktion ohne Qualitätsverlust vorgenommen werden kann.

Wie oben erwähnt wird zunächst ein Druckmotiv bereitgestellt, wobei typischerweise als Druckmotive verschiedene Dekore wie Furniere mit Holzmaserungen, Fliesenmuster, Parkettimitate oder Fantasiemuster eingesetzt werden können.

In einer Ausführungsform des vorliegenden Verfahrens wird das mindestens eine Druckmotiv mit der mindestens einen bildbearbeitenden Software nicht nur in einen hochaufgelösten elektronischen Datensatz umgewandelt, sondern kann gleichzeitig auch bearbeitet werden. Die Bearbeitung kann Änderungen und/oder Anpassungen betreffend Dekor und/oder Farbe umfassen wie zum Beispiel eine Modifizierung, Änderung und/oder Entfernung von Motivdetails oder eine Änderung der Anordnung der Motivdetails. Auch ist es möglich, dass das Druckmotiv in diesem Verfahrensschritt zum Angleichen des Motivanfangs und Motivendes unter Ausbildung eines Endlosmotives zu bearbeiten. Als Motivdetails können Markierungen wie zum Beispiel Schneide- oder Identifizierungsmarkierungen aus nicht sichtbarer Tinte aufgebracht werden die mittels entsprechender Detektionsgeräte auslesbar sind. Selbstverständlich können auch weitere Veränderungen oder Anpassungen des Druckmotivs und der Änderung bzw. Ergänzungen des Datensatz erfolgen.

Gemäß dem vorliegenden Verfahren wird in einem weiteren Schritt c) der hochaufgelöste elektronische Datensatz digital in die darin enthaltenden einzelnen Farbinformationen separiert bzw. zerlegt. Dabei wird die in dem mindestens einen elektronischen Datensatz enthaltene Farbinformation in mindestens vier Farbkanäle oder mehr separiert.

Gemäß dem Vorliegenden Verfahren sind mindestens vier Farbkanäle jeweils den Farbbestandteilen Cyan, Magenta, Yellow und Key des Farbsystems CMYK zugeordnet.

In einer besonders bevorzugten Ausführungsform sind mindesten vier Farbkanäle einem modifizierten Farbsatz des Farbsystems CMYK zugeordnet, wobei der modifizierte Farbsatz aus den Farben Cyan, rötliches Gelb, grünliches Gelb und Key besteht. In einem Beispiel umfasst der modifizierte Farbsatz die folgenden Pigmente:

| | |
|---|---|
| Key: | PBI 7 |
| Cyan: | PR 254 |
| Rötliches Gelb: | PY 181/PR 207 |
| Grünliches Gelb: | PY150 |

Es ist auch bevorzugt, zusätzlich zu den vier Farben des CMYK Systems bzw. des modifizierten Farbsatzes davon weitere Farben, wie Blau, light Cyan, light Magenta, Silber und Grau einzusetzen. Besonders bevorzugt ist der Einsatz von Blau als weitere Farbe. Der Einsatz von mehr als vier Farben bzw. Farbkanälen wie z.B. mit der Zusatzfarbe Blau, oder von fünf, sechs und mehr Farben bzw. Farbkanälen ist besonders vorteilhaft, um spezielle Sonderfarben für Kunden zu erzeugen. In einer besonders bevorzugten Ausführungsform wird als Zusatzfarbe die Farbe Blau mit den Pigmenten PB 16:4 verwendet.

Die Zerlegung der Farbinformationen in die separaten Farbkanäle ermöglicht eine einzelne und separate Bearbeitung der jeweiligen Farbkanäle, so dass beliebige Farben erzeugbar sind. Gegebenenfalls zum Einsatz kommende Sonderfarben werden in Form eines separaten Kanales gespeichert. Es ist auch vorstellbar, dass beliebige Farbkanäle ergänzt oder entfernt werden.

Parallel oder anschließend werden die in Schritt c) bereitgestellten, separierten Farbinformationen, gegebenenfalls nach einer unabhängigen Bearbeitung der jeweils in einem Farbkanal enthaltenen Farbinformation (Schritt d)) zu mindestens einer digitalen Druckdatei für ein im Digitaldruckverfahren zu erstellendes Druckdekor zusammengefasst. Vorzugsweise wird die digitale Druckdatei in ein für den zum Einsatz kommenden Digitaldrucker anwendbares Format mittels RIP umgewandelt.

Die in Schritt b) bereitgestellten hochaufgelösten Daten bzw. die in Schritt e) erzeugte digitale Druckdatei sind für den Digitaldruck eines Dekors auf einem ersten Trägermaterial und, wenn gewünscht, auf weiteren Trägermaterialien sowie in nachfolgenden Verarbeitungsschritten einsetzbar und können somit zur Ansteuerung eines Digitaldruckers sowie nachfolgender Vorrichtungen, wie z.B. einer Kurztaktpresse oder einer Vielblattsäge, eingesetzt werden.

Unter Verwendung der hochaufgelösten Daten bzw. der digitalen Druckdatei wird gemäß Schritt f) mindestens ein Druckdekor im Digitaldruckverfahren auf einem Trägermaterial erzeugt.

Das erfindungsgemäße Verfahren ist insbesondere durch den Schritt g) gekennzeichnet. In diesem Schritt werden die Positionsdaten mindestens eines der in Schritt c) bereitgestellten, separierten Farbbestandteile ermittelt und gespeichert. Vorzugsweise erfolgt das Ermitteln der Positionsdaten während der Erzeugung des Druckdekors auf dem Trägermaterial gemäß Schritt f). Die Positionsdaten können durch exakte Positionierung der Platte, z.B. an einem Lineal, ermittelt werden. Anhand des Lineals kann nachfolgend jede beliebige Position auf dem Trägermaterial zugeordnet bzw. angefahren werden. Im Normalfall werden die Positionsdaten durch das Separieren der Farbbestandteile ermittelt und liegen im elektronischen System des Digitaldruckers vor. Vorzugsweise sind die Positionsdaten auch Bestandteil der digitalen Druckdatei für ein im Digitaldruckverfahren zu erstellendes Druckdekor.

Gemäß dem vorliegenden Verfahren werden die Positionsdaten des Farbestandteils Key ermittelt und gespeichert.

Dies ist von Vorteil, da eine Vielzahl von Farb- und Strukturvariationen an die dunkelste Farbe im Digitaldruck, Key, gekoppelt sind. Im elektronischen System des Digitaldruckers bzw. der digitalen Druckdatei sind die Positionsdaten der Farbe Key im Dekor genau bekannt. Diese Information kann nun bis zum Fertigprodukt an den bedruckten Träger gekoppelt durch die Fertigung geschleust werden. Zusätzlich ist möglich, die Nachverfolgbarkeit einzelner Trägerplatten über den gesamten Herstellungsprozess dadurch zu gewährleiten, dass jede Trägerplatte mit einer Identifizierungsmarkierung, wie z.B. elektronischen Nummer versehen wird.

Das erfindungsgemäße Verfahren ist besonders vorteilhaft beim Digitaldruck von Dekoren, die Holzreproduktionen als Basis haben, da dort die Separation des Farbbestandteils Key eine überragende Rolle spielt. Die Maserung und das Farbspiel in einem Holzdekor werden wesentlich von der Separation des Farbbestandteils bestimmt. Es besteht zum Beispiel die Möglichkeit, dass anhand der Positionsdaten des Farbestandteils Key in einem weiteren Verfahrensschritt, d.h. gleichzeitig oder nachträglich zum Druck des gewünschten Dekors mindestens eine Sonderfarbe zur dekorativen bzw. optischen Aufwertung des Dekors auf das Druckdekor aufgebracht wird, wodurch beispielsweise eine Holzmaserung dekorativ aufwertet wird. Eine geeignete Sonderfarbe kann z.B. eine Perlmuttfarbe, metallpigmenthaltige Farbe oder ähnliches sein. Durch die Nutzung der Positionsdaten des Farbestandteils Key wird eine sehr große Übereinstimmung der Position der Sonderfarbe mit der Maserung des Dekors erzeugt.

Anhand der Positionsdaten des Farbestandteils Key wird in einem weiteren Verfahrensschritt eine mit der Position des Druckdekors übereinstimmende Negativ- und/oder Positivstruktur erzeugt.

In einer Ausführungsform des erfindungsgemäßen Verfahrens erfolgt das Erzeugen der Negativ- und/oder Positivstruktur durch Aufdrucken, z.B. einer farblosen Tinte, wie beispielsweise einer UV-Tinte oder einer wässrigen Tinte, vorzugsweise einer UV-Tinte. Dadurch ist es möglich, die Maserung des Dekors, wie beispielsweise eines Holzdekors, auch haptisch fühlbar zu gestalten.

Als weiteres Beispiel sind Glanz-Matt-Effekte zu erwähnen, die beispielsweise durch das Auftragen einer oder mehrerer weiterer farbloser Tinten, wie beispielsweise von UV-Tinten und/oder wässrigen Tinten erzeugt werden können. Dabei kann die Anzahl der durch den Drucker erzeugbaren Farben ein limitierender Faktor sein. In einer Ausführungsform des erfindungsgemäßen Verfahrens werden das gewünschte Druckdekor und die Negativ- und/oder Positivstruktur und/oder die Glanz-Matt-Effekte mit einem ersten Digitaldrucker erzeugt. Bei Bedarf kann die Erzeugung der geschilderten Sondereffekte auch mit Hilfe eines zweiten Digitaldruckers erfolgen. In vorteilhafter Weise können nun die Positionsdaten des separierten des Farbestandteils Key, die digital und gespeichert vorliegen, an den zweiten oder gegebenenfalls jeden weiteren Digitaldrucker weitergeleitet werden. Durch die Nutzung der identischen Positionsdaten des Farbestandteils Key wird so auch durch den zweiten oder jeden weiteren Digitaldrucker eine hohe Übereinstimmung der Position der gedruckten Sonderfarbe bzw. der gedruckten Negativ- und/oder Positivstruktur mit der Maserung des Dekors, wie beispielsweise eines Holzdekors, erzielt.

Die in dem vorliegenden Verfahren verwendeten Trägermaterialien können ausgewählt sein aus einer Gruppe enthaltend Papier, Glas, Metall, Folien, Holzwerkstoffe, insbesondere MDF- oder HDF-Platten, Wood Plastic Composites (WPC), Furniere, Lackschichten, Kunststoffplatten, HPL/CPL und anorganischen Trägerplatten. In einer weiteren Ausführungsform des vorliegenden Verfahrens ist das mittels Digitaldruck erstellte Druckdekor auf einheitlich vorgrundierte Trägermaterialien aufgedruckt.

Die Trägermaterialien können zum Beispiel durch eine Grundierschicht aus einem Harz und/oder einem Lack vorbehandelt sein. Dabei kann zur Grundierung eine wässrige Harzlösung und/oder eine strahlenhärtbare Spachtelmasse auf die zu bedruckende Seite des Trägermaterials aufgetragen werden. Als Grundierungsmittel sind zum Beispiel wässrige formaldehydhaltige Harzlösungen wie Melamin-Formaldehyd-Harz, Harnstoff-Formaldehyd-Harz oder Melamin-Harnstoff-Formaldehyd-Harz einsetzbar. Es ist ebenfalls möglich, das Trägermaterial mit UV-Spachtel und/oder ESH-Spachtel vorweg zu beschichten bzw. zu grundieren und anschließend diese Grundierungsschicht entsprechend auszuhärten. Selbstverständlich können die Grundierungen auch Pigmente enthalten.

Es ist ebenfalls möglich, auf das Druckdekor bzw. die Druckdekore mindestens eine Schutzschicht, insbesondere eine Schicht umfassend abriebfeste Partikel, natürliche Fasern, synthetische Fasern und/oder weitere Additive aufzutragen, wobei Harze wie Melamin-Formaldehyd-Harz, Harnstoff-Formaldehyd-Harz, Acrylatharze und Polyurethanharze als geeignete Bindemittel zum Einsatz kommen können.

Die abriebfesten Partikel sind bevorzugt ausgewählt aus der Gruppe enthaltend Aluminiumoxide, Korund, Borcabide, Siliciumdioxide, Siliciumcarbide und Glaskugeln. Als Fasern kommen natürliche und/oder synthetische Fasern, insbesondere Fasern ausgewählt aus der Gruppe enthaltend Holzfasern, Zellulosefasern, Wollfasern, Hanffasern und organische oder anorganische Polymerfasern zum Einsatz.

Als Additive können leitfähige Substanzen, Flammschutzmittel, luminiszierende Stoffe und Metalle zugegeben werden. Dabei können die leitfähigen Substanzen ausgewählt sein aus der Gruppe enthaltend Ruß, Kohlefasern, Metallpulver und Nanopartikel, insbesondere Kohlenstoffnanoröhren. Es können auch Kombinationen dieser Substanzen zum Einsatz kommen. Als Flammschutzmittel werden bevorzugt Phosphate, Borate, insbesondere Ammoniumpolyphosphat, Tris(tri-bromneopentyl)phosphat, Zinkborat oder Borsäurekomplexe von mehrwertigen Alkoholen verwendet. Als luminiszierende Stoffe werden bevorzugt fluoreszierende und/oder phosphoreszierende Stoffe auf anorganischer oder organischer Basis, insbesondere Zinksulfit und Erdalkalialuminate verwendet.

In einer weiteren Ausführungsform des vorliegenden Verfahrens wird das bedruckte und gegebenenfalls mit einer Schutzschicht, insbesondere aus Formaldehydharzen, versehene Trägermaterial in einer Kurztakt (KT)-Presse weiter bearbeitet bzw. veredelt. In der KT-Presse werden die Harzschichten aufgeschmolzen und der Schichtverbund zu einem Laminat ausgehärtet. Während der Weiterverarbeitung in der KT-Presse können unter Verwendung eines strukturierten Pressbleches auch Oberflächenstrukturen in der Oberfläche des Trägermaterials wie einer Holzwerkstoffplatte erzeugt werden, die vorzugsweise auf das Dekor abgestimmt ausgeführt werden (so genannte dekorsynchrone Struktur). Bei Holzdekoren können die Strukturen in Form von Porenstrukturen vorliegen, die der Maserung folgen. Bei vielen Dekoren können die Strukturen Vertiefungen im Bereich von dem Dekor umfasster Fugen Füllungslinien sein. Auch in diesem Verfahrensschritt ist die Mehrfachnutzung der erzeugten digitalen Daten möglich. In vorteilhafter Weise können nun die Positionsdaten des separierten Farbestandteils Key, die digital und gespeichert vorliegen, an die KT-Presse weitergeleitet werden. Durch die Nutzung der Positionsdaten des Farbestandteils Key wird das Trägermaterial in der KT-Presse so positioniert, dass eine möglichst deckungsgleiche Positionierung der mittels der KT-Presse erzeugten Strukturierung mit der Maserung des Dekors, wie beispielsweise eines Holzdekors, erzielt wird. Damit kann auf Kamerasysteme, mit denen die korrekte Positionierung des Trägermaterials in der KT-Presse auf konventionelle Art überprüft wird, verzichtet werden.

Üblicherweise wird das bedruckte und ggf. mit einer Schutzschicht versehene Trägermaterial in einem weiteren Verfahrensschritt mittels einer Zuschnitteinrichtung in kleinere Formate überführt. Bei Trägermaterialien auf Holz- oder Kunststoffbasis handelt es sich bei der Zuschnitteinrichtung beispielsweise um eine Vielblattsäge. In diesem Verfahrensschritt ist die Mehrfachnutzung der erzeugten digitalen Daten ebenfalls möglich. In vorteilhafter Weise können die Positionsdaten des separierten Farbestandteils Key, die digital und gespeichert vorliegen, an die Zuschnitteinrichtung weitergeleitet werden. Durch die Nutzung der Positionsdaten des Farbestandteils Key wird das Trägermaterial in der Zuschnitteinrichtung so positioniert, dass ein geeignetes Schnittbild erzeugt werden kann. Dies ist von besonderer Bedeutung bei dekorierten Trägermaterialien, die später zu kleineren Elementen (Möbelfronten, Laminatdielen usw.) verarbeitet werden und bei denen aufgrund der Art des Dekors mit großer Schnittgenauigkeit gearbeitet werden muss, wie z.B. bei Laminatböden, deren Dekore aus zusammengesetzten Bildern bestehen oder die Mosaik- oder Tafelparkett imitieren sollen.

Erfindungsgemäß ist es auch möglich, die erzeugten digitalen Daten für noch weitere bzw. andere Bearbeitungsoptionen, bei denen eine genaue Positionierung erforderlich ist, zu verwenden. Als Beispiele seien für den Bereich von Laminatdielen das Anbringen von Nuten und Fräskanten oder das Erzeugen von Negativstrukturen auf der Oberfläche mittels Fräsen oder anderer mechanischer Mittel genannt.

Einige Dekore enthalten auf Grund ihrer Helligkeit nur geringe Anteile an dunkler Farbe. In solchen Fällen ist die Verwendung des separierten Farbanteils Key ungeeignet für die Ermittlung der Positionsdaten des Dekors als Basis für die Mehrfachnutzung der digitalen Daten. Das Gleiche gilt auch für Stein-oder Phantasiedekore bzw. für zusammengesetzte Bilder, die über eine Vielzahl von Einzelelementen verteilt sein können. Erfindungsgemäß kann anstelle des Farbbestandteils Key auch jeder andere geeignete separierte Farbbestandteil, zum Beispiel ausgewählt aus den separierten Farbbestandteilen Cyan, Magenta, Yellow und Key des Farbsystems CMYK oder einem modifizierten Farbsatz davon, zur Bestimmung der Positionsdaten des Druckdekors verwendet werden.

Die Erfindung betrifft auch ein Trägermaterial und/oder aus diesem Trägermaterial hergestellte Einzelelemente, wie beispielsweise Möbelplatten oder Fußbodenlaminatdielen, herstellbar mit dem erfindungsgemäßen Verfahren.

Die Erfindung stellt auch eine Vorrichtung zur Erzeugung optisch und/oder haptisch hochwertiger Druckdekore durch Mehrfachnutzung digitaler Druckdaten zur Durchführung des erfindungsgemäßen Verfahrens bereit, wobei die Vorrichtung
- mindestens ein Mittel zum Umwandeln von mindestens einem Druckmotiv in mindestens einen hochaufgelösten elektronischen Datensatz mit einer Auflösung von bis zu 2400 dpi, bevorzugt 1200 dpi, und optional zum Bearbeiten des mindestens einen hochaufgelösten Datensatzes;
- mindestens ein Mittel zum digitalen Separieren der in dem mindestens einen elektronischen Datensatz enthaltenen Farbinformation in mindestens vier Farbkanäle, wobei die mindestens vier Farbkanäle jeweils den Farbbestandteilen Cyan, Magenta, Yellow und Key des Farbsystems CMYK oder einem modifizierten Farbsatz davon zugeordnet sind,
- mindestens ein Mittel zum Zusammenfassen der separierten Farbinformationen aus den 4 Farbkanälen zu mindestens einer digitalen Druckdatei,
- mindestens eine Druckstraße mit mindestens einem Digitaldrucker zum Erstellen eines Druckdekors auf einem Trägermaterial unter Verwendung der mindestens einen digitalen Druckdatei,
- mindestens ein Mittel zur Ermittlung und Speicherung der Positionsdaten mindestens eines Farbbestandteils beim Erzeugen des Druckdekors auf dem Trägermaterial, und
- mindestens ein Mittel zum Verknüpfen der Positionsdaten mit dem bedruckten Trägermaterial umfasst;
   wobei die Vorrichtung weiterhin
   - einen zweiten Digitaldrucker in der Druckstraße zum Aufbringen mindestens einer UV-Tinte oder wässrigen Tinte zur Erzeugung einer mit der Position des Farbbestandteils Key des Druckdekors übereinstimmenden Negativ- und/oder Positivstruktur,
      und/oder
   - eine Kurztakt-Presse zur Erzeugung einer mit der Position des Druckdekors übereinstimmenden Struktur des bedruckten und ggf. mit einer Schutzschicht versehenen Trägermaterials umfasst,
   wobei die Positionierung des Trägermaterials in der Kurztakt-Presse anhand der Positionsdaten des Farbbestandteils Key des Druckdekors auf dem Trägermaterial vorgenommen wird.

Die zuvor beschriebenen Vorteile und vorteilhaften Ausführungsformen für das erfindungsgemäße Verfahren gelten gleichermaßen für die erfindungsgemäße Vorrichtung, so dass auf das zuvor genannte Bezug genommen wird.

In einer Variante weist die Druckstraße der Vorrichtung einen zweiten Digitaldrucker auf. Der zweite Digitaldrucker dient dem Aufbringen mindestens einer Sonderfarbe und/oder mindestens einer UV-Tinte.

In einer weitergehenden Variante umfasst die folgende Vorrichtung mindestens ein Mittel zum Aufbringen einer Schutzschicht auf das mit dem jeweiligen Druckdekor versehene Trägermaterial. Dieses Mittel bzw. diese Vorrichtung zum Aufbringen einer Schutzschicht ist vorzugsweise im Anschluss an die Druckstraße angeordnet.

In einer bevorzugten Ausführungsform weist die vorliegende Vorrichtung mindestens eine Kurztaktpresse zum Verpressen des mit dem Druckdekor versehene Trägermaterials und der darauf angeordneten Schutzschicht auf.

In einer besonders bevorzugten Ausführungsform sind das mindestens eine Mittel zum Umwandeln von mindestens einem Druckmotiv in mindestens einen hochaufgelösten elektronischen Datensatz, das mindestens eine Mittel zum digitalen Separieren der in dem mindestens einen elektronischen Datensatz enthaltenen Farbinformationen, das mindestens eine Mittel zum Zusammenfassen der separierten Farbinformationen, der mindestens eine Digitaldrucker und gegebenenfalls weitere Digitaldrucker und das mindestens ein Mittel zur Ermittlung und Speicherung der Positionsdaten mindestens eines Farbbestandteils miteinander vernetzt oder in anderer Weise für die Übertragung der mit dem erfindungsgemäßen Verfahren erzeugten digitalen Daten eingerichtet. Vorzugsweise verfügen die vorgenannten Mittel über eine Kommunikationseinrichtung, beispielsweise eine serielle oder parallele Schnittstelle, eine USB-Schnittstelle, Mini-USB-Schnittstelle, ein WLAN-Modul, einen LAN-Anschluss oder ein Bluetooth-Modul.

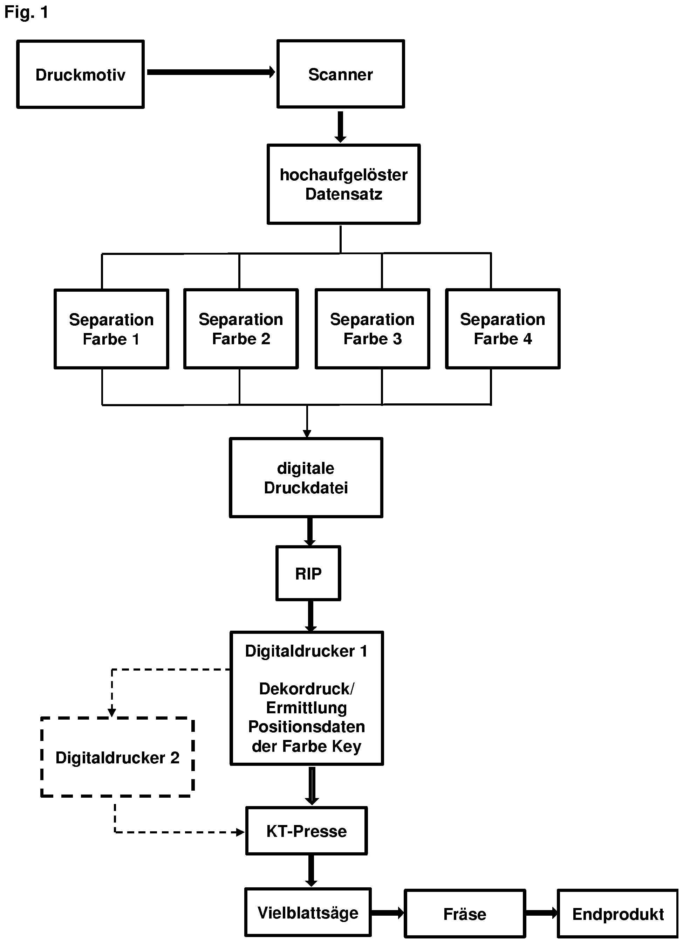

Die Erfindung wird nachfolgend unter Bezugnahme auf die Figur 1 und anhand von vier Ausführungsbeispielen näher erläutert. Es zeigt:
Figur 1 eine schematische Darstellung einer Ausführungsform des erfindungsgemäßen Verfahrens.

Unter Bezugnahme auf das Schema der Figur 1 wird ein Druckmotiv bereitgestellt, welches auf einem Furnier aus Echtholz, auf Stein oder auch auf einer Papiervorlage basieren kann.

Dieses Druckmotiv wird unter Verwendung eines Scanners in einem hochaufgelösten elektronischen Datensatz mit einer Auflösung von üblicherweise 1200 bis 2400 dpi umgewandelt.

Der digital erfasste hochaufgelöste Datensatz wird in einem weiteren Bearbeitungsschritt mit einer Software wie zum Beispiel Photoshop an einem PC-Arbeitsplatz weiterverarbeitet. Hier können zum Beispiel bei einem Holzdekor Astlöscher hinzugefügt oder entfernt oder verändert werden.

Anschließend werden die verschiedenen Strukturen im Dekor farblich zerlegt beziehungsweise aufgetrennt und in dem hier gezeigten Beispiel vier Farbkanälen zugeordnet.

Die Farben beziehungsweise Farbmischungen in den separierten Farbkanälen können unabhängig voneinander bearbeitet werden, so dass es hier zu keiner gegenseitigen Beeinflussung und Änderung der Farbzusammensetzung in den anderen Farbkanälen kommt.

Parallel oder im Anschluss werden die in den Farbkanälen separierten und gegebenenfalls bearbeiteten Farbinformationen zu einer digitalen Druckdatei zusammengefasst, das heißt die erstellten Separationsdaten werden zu einer digitalen Vorlage für den Digitaldruck zusammengefasst. Nach Umwandeln der digitalen Druckdatei in ein für den Digitaldrucker anwendbares Format mittels RIP (Raster Image Process) wird unter Verwendung des Digitaldruckers 1 ein Druckdekor auf einem Trägermaterial erstellt.

Während der Erstellung des Druckdekors werden vom Digitaldrucker die Positionsdaten des separierten Farbbestandteils Key des Druckdekors ermittelt. Möglich wäre auch die Ermittlung und Speicherung der Positionsdaten eines separierten Farbbestandteils einer anderen Farbe.

Die Positionsdaten des separierten Farbbestandteils Key können über eine Netzwerkverbindung an den Digitaldrucker 2 weitergegeben werden oder in der digitalen Dekordruckdatei gespeichert werden. Digitaldrucker 2 kann dazu genutzt werden, ein oder mehrere Sonderfarben und/oder UV-Tinten deckungsgleich zur Maserung des Druckdekors auf dem Trägermaterial aufzubringen.

Nach dem Aufbringen weiterer Schichten, wie beispielsweise einer Schutzschicht, insbesondere aus Formaldehydharzen, wird das bedruckte Trägermaterial in einer KT-Presse weiter bearbeitet bzw. veredelt. Die Positionsdaten des separierten Farbbestandteils Key werden an die KT-Presse übertragen und genutzt, um die Trägerplatte so in der KT-Presse zu positionieren, dass eine Struktur deckungsgleich zur Maserung des Druckdekors erzeugt wird. In dem in Figur 1 gezeigten Beispiel schließt sich die Herstellung von Laminatdielen aus einer großformatigen Trägerplatte an. Die Positionsdaten des separierten Farbbestandteils Key werden an eine Vielblattsäge übertragen und genutzt, um ein geeignetes Schnittmuster für die Herstellung der einzelnen Laminatdielen zu erzeugen.

In dem in Figur 1 gezeigten Beispiel schließt sich noch ein weiterer Verfahrensschritt an. Die Positionsdaten des separierten Farbbestandteils Key werden an eine Fräse übertragen und genutzt, um ein Fräswerkzeug für das Anbringen von Nut und Feder für das spätere Verlegen der Laminatdielen im "Klick"-Verfahren zu positionieren.

Im Ergebnis ermöglicht das vorliegende Verfahren die Erstellung eines authentischen Druckdekors mit verbesserten optischen und/oder haptischen Eigenschaften auf einem Trägermaterial. Das erfindungsgemäße Verfahren ist besonders vorteilhaft, da die Dekore und die Haptik der Dekore variabel gestaltbar sind und die Erzeugung verschiedenster Oberflächenvarianten möglich ist. Zudem ergeben sich Verbesserungen bei der Weiterverarbeitung der Trägermaterialien.

### Ausführungsbeispiel 1

Eine mit einer titandioxidhaltigen Grundierung beschichtete HDF-Platte (8 mm) wurde mit einem Digitaldrucker, der über acht Reihen mit Druckköpfen verfügt, mit einem Holzdekor bedruckt. Es kam dabei zunächst ein CMYK-Farbsatz zur Anwendung. Bei den Tinten handelte es sich um wasserbasierte Systeme. Zunächst wurden HDF-Platten ohne weitere farbliche Aufwertung der Maserung produziert. In einem nächsten Versuch wurde mit einer fünften Tinte anschließend unter Ausnutzung der Separierung des Farbbestandteils Key eine Perlmutttinte in die Maserung gedruckt. Danach wurde die Holzmaserung in einem weiteren Versuch unter Ausnutzung der Key-Separation mit einer sechsten Tinte (Wassertinte mit silberfarbenem Pigment) bedruckt. Die Platten wurden anschließend mit einem mit Melaminharz beharztem Overlay auf der Oberseite und einem ebenfalls mit Melaminharz beharztem Gegenzug in einer Kurztaktpresse verpresst. Durch die unterschiedlichen Tinten, die für die Holzmaserung verwendet wurden, ist nach der Verpressung, wie gewünscht, eine deutlich unterschiedliche Dekordarstellung entstanden.

### Ausführungsbeispiel 2

Eine Vielzahl mit einer titandioxidhaltigen Grundierung beschichteten HDF-Platten (8 mm) wurde mit einem Digitaldrucker mit einem Holzdekor bedruckt. Der Drucker, der über vier

Reihen Druckköpfe verfügte, druckte mit einem modifizierten Farbsatz (rY= rötliches gelb, gY= grünliches gelb, C= rot und K= Key bzw. schwarz). Die Tinten waren wasserbasiert. Während des Druckes wurden die Positionsdaten der Farbe Key des auf der Platte aufgebrachten Dekors gespeichert und die Platte selbst ebenfalls in einem System mit einer elektronischen Nummer versehen. Im Folgenden wurden die bedruckten HDF-Platten an einer Flüssiglinie mit einer korund- und glaskugelhaltigen Melaminharzrezeptur auf der Oberseite und einer Farbe enthaltenden Melaminharzrezeptur auf der Unterseite im Mehrfachauftrag beschichtet und zwischengetrocknet. Danach wurden die Platten vor einer Kurztaktpresse mit Hilfe der elektronischen Nummerierung und der Positionsdaten der Farbe Key positioniert. Beim Transport und Ablegen der Platten in der Presse sorgte die Positionierung für ein gezieltes Ablegen. Danach werden die Platten in der Presse unter Verwendung eines strukturierten und verchromten Stahlblechs mit einer Holzmaserung versehen. Durch die genaue Positionierung der Platte stimmten Holzmaserung und Pressstruktur überein (registered embossed).

### Ausführungsbeispiel 3

Eine mit einer titandioxidhaltigen Grundierung beschichtete HDF-Platte (12 mm, Format: 2440 x 2070 mm) wurde mit einem Digitaldrucker mit einem modifizierten CMYK-Farbsatz (rY= rötliches gelb, gY= grünliches gelb, C= rot und K= schwarz) bedruckt. Die Tinten sind wasserbasiert. Als Motiv wurde ein digitaler Datensatz einer Tafelparkettimitation verwendet. Bei dem Motiv handelte es sich um eine Windrose in alternierender Birke- und Nussbaumreproduktion auf Mahagoniriemchen. Dabei bildeten acht Riemchen jeweils ein Quadrat. Auf der HDF-Platte befanden sich in der Breite fünf und in der Länge sechs Tafelparkettimitationen. Die Positionsdaten des Farbbestandteils Key wurden zusammen mit einer elektronischen Nummer für die Platte durch die weitere Produktion geführt. Die bedruckte Platte wurde anschließend in einer KT-Presse auf der Oberseite mit einem mit Melaminharz imprägnierten Overlay und auf der Unterseite mit einem ebenfalls mit Melaminharz imprägnierten Gegenzug beschichtet. Die Platte wurde nach dem Abkühlen an einer Fußbodenlinie mit Hilfe einer Vielblattsäge aufgetrennt. Dabei kamen für die Positionierung der Sägeblätter die Positionsdaten der Farbe Key zum Einsatz. Nach dem Auftrennen der HDF-Platte in Rohfixmasse wurden diese an Fräsautomaten mit leimlosen Profilen versehen. Nach der probeweisen Installation der Elemente waren zwischen den Windrosen entlang der Schnitt- bzw. Fräskanten gleich breite Mahagoni-Riemchen erkennbar.

### Ausführungsbeispiel 4

Eine Vielzahl mit einer Finishfolie auf der Oberseite und einem Gegenzug auf der Unterseite beschichtete HDF-Platten (8 mm) wurden auf der Oberseite mit einem Digitaldrucker mit einem Holzdekor bedruckt. Der Drucker, der über vier Reihen Druckköpfe verfügte, druckte mit einem modifizierten Farbsatz (rY= rötliches gelb, gY= grünliches gelb, C= rot und K= schwarz). Es wurden Tinten auf UV-Basis benutzt. Während des Druckes wurden die Positionsdaten der Farbe Key des auf die Platte gedruckten Dekors gespeichert und die Platte selbst ebenfalls in einem System mit einer elektronischen Nummer versehen. Im Folgenden wurden die bedruckten HDF-Platten an einer Lackierlinie mit einem korundhaltigen UV-Lack abgewalzt und mit einem Schleifgrund auf UV-Basis versehen. Die Lacke werden durch UV-Strahler angehärtet bzw. gehärtet. Danach wurde mit Hilfe eines Digitaldruckers eine farblose UV-Tinte aufgetragen. Diese wurde auf alle Bereiche, außer den Bereichen, in denen mit schwarzer UV-Tinte gedruckt wurde, aufgetragen. Dabei konnte durch mehrere Druckkopfreihen eine Menge von 30 - 80 g UV-Tinte/m² aufgetragen werden. Der Schichtaufbau wurde mit Hilfe eines UV- oder ESH-Strahlers gehärtet. Nach der Härtung war die Holzmaserung als Pore auf der Fläche erkennbar. Dabei zeigten Bereiche, in denen eine größere Menge schwarzer Tinte aufgetragen wurde, eine tiefere Maserung als Bereiche, in denen weniger Tinte aufgetragen wurde.

## Patentansprüche

1. Verfahren zur Mehrfachnutzung digitaler Druckdaten zur Erzeugung optisch und/oder haptisch hochwertiger Druckdekore auf einem Trägermaterial
umfassend die Schritte
a) Bereitstellen von mindestens einem Druckmotiv;
b) Umwandeln des mindestens einen Druckmotivs in mindestens einen hochaufgelösten elektronischen Datensatz mit einer Auflösung von bis zu 2400 dpi, bevorzugt 1200 dpi, unter Verwendung von mindestens einer bildbearbeitenden Software,
c) digitales Separieren der in dem mindestens einen elektronischen Datensatz enthaltenen Farbinformation in mindestens vier Farbkanäle, wobei die mindestens vier Farbkanäle jeweils den Farbbestandteilen Cyan, Magenta, Yellow und Key des Farbsystems CMYK oder einem modifizierten Farbsatz davon zugeordnet sind,
d) optional unabhängiges Bearbeiten der jeweils in einem Farbkanal enthaltenden Farbinformation;
e) Zusammenfassen der, insbesondere in Schritt c) oder optional in Schritt d) bereitgestellten, separierten Farbinformationen zu mindestens einer digitalen Druckdatei für ein im Digitaldruckverfahren zu erstellendes Druckdekor;
f) Erstellen von mindestens einem Druckdekor auf einem Trägermaterial unter Verwendung der mindestens einen digitalen Druckdatei mit mindestens einem Digitaldrucker;
wobei das Verfahren weiterhin die Schritte umfasst:
g) Ermittlung und Speicherung der Positionsdaten mindestens des in Schritt c) bereitgestellten, separierten Farbbestandteils Key beim Erzeugen des Druckdekors auf dem Trägermaterial in Schritt f); Verknüpfung der Positionsdaten mit dem in Schritt f) bedruckten Trägermaterial; anhand der verknüpften Positionsdaten des Farbbestandteils Key Vornahme von positionsgenauen Variationen der farbigen Anmutung und der Oberflächenstruktur, die mit dem gedruckten Dekor deckungsgleich sind; wobei die Vornahme der positionsgenauen Variation der farbigen Anmutung unter Verwendung eines Digitaldruckers in einer Druckstraße zum Aufbringen mindestens einer Sonderfarbe vorgenommen wird, und wobei die Vornahme der positionsgenauen Variationen der Oberflächenstruktur unter Verwendung
- eines Digitaldruckers in einer Druckstraße zum Aufbringen mindestens einer UV-Tinte oder wässrigen Tinte zur Erzeugung einer mit der Position des Druckdekors übereinstimmenden Negativ- und/oder Positivstruktur und/oder
- einer Kurztakt-Presse zur Erzeugung einer mit der Position des Druckdekors übereinstimmenden Struktur des bedruckten und ggf. mit einer Schutzschicht versehenen Trägermaterials
vorgenommen wird.

2. Verfahren nach Anspruch 1, **dadurch gekennzeichnet, dass** der in Schritt b) erstellte hochaufgelöste Datensatz bearbeitet wird, insbesondere Änderungen und/oder Anpassungen betreffend Dekor und/oder Farbe vorgenommen werden.

3. Verfahren nach einem der vorhergehenden Ansprüche, **dadurch gekennzeichnet, dass** die in Schritt g) erstellte mindestens eine digitale Druckdatei in ein für den Digitaldruck anwendbares Format, insbesondere mittels RIP, umgewandelt wird.

4. Verfahren nach einem der vorhergehenden Ansprüche, **dadurch gekennzeichnet, dass** das Aufbringen der mindestens einen Sonderfarbe oder der UV-Tinte und/oder der wässrigen Tinte mit einem zweiten Digitaldrucker erfolgt, wobei die Positionsdaten der Farbe Key zuvor von dem ersten Digitaldrucker an den zweiten Digitaldrucker übertragen worden sind.

5. Verfahren nach einem der vorhergehenden Ansprüche, **dadurch gekennzeichnet, dass** das mindestens eine Trägermaterial ausgewählt ist aus einer Gruppe enthaltend Papier, Glas, Metall, Folien, Holzwerkstoffe, insbesondere MDF- oder HDF-Platten, WPC-Platten, Furniere, Lackschichten, Kunststoffplatten, HPL/CPL und anorganische Trägerplatten.

6. Verfahren nach einem der vorhergehenden Ansprüche, **dadurch gekennzeichnet, dass** das mittels Digitaldruck erstellte Druckdekor auf einheitlich vorgrundierte Trägermaterialien aufgedruckt ist.

7. Verfahren nach einem der vorhergehenden Ansprüche, **dadurch gekennzeichnet, dass** auf das Druckdekor eine Schutzschicht aufgetragen wird.

8. Verfahren nach einem der vorhergehenden Ansprüche, **dadurch gekennzeichnet, dass** das bedruckte und ggf. mit einer Schutzschicht versehene Trägermaterial mittels einer Zuschnitteinrichtung in kleinere Formate überführt wird, und dadurch, dass die Positionierung der Trägermaterials zur Erzeugung eines geeigneten Schnittbildes in der Zuschnitteinrichtung anhand der Positionsdaten der Farbe Key des Druckdekors auf dem Trägermaterial vorgenommen wird.

9. Vorrichtung zur Erzeugung optisch und/oder haptisch hochwertiger Druckdekore durch Mehrfachnutzung digitaler Druckdaten
umfassend
- mindestens ein Mittel zum Umwandeln von mindestens einem Druckmotiv in mindestens einen hochaufgelösten elektronischen Datensatz mit einer Auflösung von bis zu 2400 dpi, bevorzugt 1200 dpi, und optional zum Bearbeiten des mindestens einen hochaufgelösten Datensatzes;
- mindestens ein Mittel zum digitalen Separieren der in dem mindestens einen elektronischen Datensatz enthaltenen Farbinformation in mindestens vier Farbkanäle, wobei die mindestens vier Farbkanäle jeweils den Farbbestandteilen Cyan, Magenta, Yellow und Key des Farbsystems CMYK oder einem modifizierten Farbsatz davon zugeordnet sind,
- mindestens ein Mittel zum Zusammenfassen der separierten Farbinformationen aus den 4 Farbkanälen zu mindestens einer digitalen Druckdatei,
- mindestens eine Druckstraße mit mindestens einem Digitaldrucker zum Erstellen eines Druckdekors auf einem Trägermaterial unter Verwendung der mindestens einen digitalen Druckdatei,
- mindestens ein Mittel zur Ermittlung und Speicherung der Positionsdaten mindestens eines Farbbestandteils beim Erzeugen des Druckdekors auf dem Trägermaterial,
- mindestens ein Mittel zum Verknüpfen der Positionsdaten mit dem bedruckten Trägermaterial;
wobei die Vorrichtung weiterhin
- einen zweiten Digitaldrucker in der Druckstraße zum Aufbringen mindestens einer UV-Tinte oder wässrigen Tinte zur Erzeugung einer mit der Position des Farbbestandteils Key des Druckdekors übereinstimmenden Negativ- und/oder Positivstruktur und/oder einer Sonderfarbe anhand der Positionsdaten des Farbbestandteils Key zur optischen Aufwertung des Druckdekors, und/oder
- eine Kurztakt-Presse zur Erzeugung einer mit der Position des Druckdekors übereinstimmenden Struktur des bedruckten und ggf. mit einer Schutzschicht versehenen Trägermaterials umfasst, wobei die Positionierung des Trägermaterials in der Kurztakt-Presse anhand der Positionsdaten des Farbbestandteils Key des Druckdekors auf dem Trägermaterial vorgenommen wird.

10. Vorrichtung nach Anspruch 9, **gekennzeichnet durch** mindestens ein Mittel zum Aufbringen einer Schutzschicht auf das mit dem jeweiligen Druckdekor versehenes Trägermaterial.

## Claims

1. Method for the multiple use of digital printing data for generating optically and/or haptically high-quality print decorations on a substrate material,
comprising the steps of
a) providing at least one printing motif;
b) converting the at least one printing motif into at least one high-resolution electronic data set having a resolution of up to 2400 dpi, preferably 1200 dpi, using at least one image-processing software,
c) digitally separating the colour information contained in the at least one electronic data set into at least four colour channels, wherein the at least four colour channels are respectively assigned to the colour components cyan, magenta, yellow and key of the colour system CMYK or to a modified colour set thereof,
d) optionally independently processing the colour information respectively being contained in a colour channel;
e) combining the separated colour information, provided in particular in step c) or optionally in step d), to form at least one digital printing file for a print decoration to be created in the digital printing method;
f) creating at least one print decoration on a substrate material using the at least one digital printing file by means of at least one digital printer;
wherein the method furthermore comprises the steps of:
g) determining and storing the position data of at least the separated colour component key provided in step c) in the course of generating the print decoration on the substrate material in step f);
linking the position data with the substrate material printed on in step f);
on the basis of the linked position data of the colour component key, performing positionally accurate variations of the coloured impression and of the surface structure which are congruent with the printed decoration;
wherein performing the positionally accurate variation of the coloured impression is performed using a digital printer in a printing line for applying at least one special colour, and wherein performing the positionally accurate variations of the surface structure is performed using
- a digital printer in a printing line for applying at least one UV ink or aqueous ink for generating a negative and/or positive structure corresponding to the position of the print decoration, and/or
- a short-cycle press for generating a structure of the substrate material that has been subjected to printing and optionally provided with a protective layer, which structure corresponds to the position of the print decoration.

2. Method according to Claim 1, **characterized in that** the high-resolution data set created in step b) is processed; in particular, changes and/or adaptations concerning decoration and/or colour are effected.

3. Method according to either of the preceding claims, **characterized in that**
the at least one digital printing file created in step g) is converted into a format applicable to the digital printing, in particular by means of RIP.

4. Method according to any of the preceding claims, **characterized in that**
the process of applying the at least one special colour or the UV ink and/or the aqueous ink is effected by means of a second digital printer, wherein the position data of the colour key have previously been transferred from the first digital printer to the second digital printer.

5. Method according to any of the preceding claims, **characterized in that**
the at least one substrate material is selected from a group including paper, glass, metal, films, wood materials, in particular MDF or HDF boards, WPC boards, veneers, lacquer layers, plastic boards, HPL/CPL and inorganic substrate boards.

6. Method according to any of the preceding claims, **characterized in that**
the print decoration created by means of digital printing is printed onto substrate materials that have previously been uniformly basecoated.

7. Method according to any of the preceding claims, **characterized in that**
a protective layer is applied to the print decoration.

8. Method according to any of the preceding claims, **characterized in that**
the substrate material that has been subjected to printing and optionally provided with a protective layer is converted into smaller formats by means of a cutting-to-size device, and **in that** the positioning of the substrate material for generating a suitable cut pattern in the cutting-to-size device is effected on the basis of the position data of the colour key of the print decoration on the substrate material.

9. Apparatus for generating optically and/or haptically high-quality print decorations by multiple use of digital printing data
comprising
- at least one means for converting at least one printing motif into at least one high-resolution electronic data set having a resolution of up to 2400 dpi, preferably 1200 dpi, and optionally for processing the at least one high-resolution data set;
- at least one means for digitally separating the colour information contained in the at least one electronic data set into at least four colour channels, wherein the at least four colour channels are respectively assigned to the colour components cyan, magenta, yellow and key of the colour system CMYK or to a modified colour set thereof,
- at least one means for combining the separated colour information from the four colour channels to form at least one digital printing file,
- at least one printing line with at least one digital printer for creating a print decoration on a substrate material using the at least one digital printing file,
- at least one means for determining and storing the position data of at least one colour component in the course of generating the print decoration on the substrate material,
- at least one means for linking the position data with the substrate material printed on;
wherein the apparatus furthermore comprises
- a second digital printer in the printing line for applying at least one UV ink or aqueous ink for generating a negative and/or positive structure, corresponding to the position of the colour component key of the print decoration, and/or a special colour on the basis of the position data of the colour component key for optical enhancement of the print decoration, and/or
- a short-cycle press for generating a structure of the substrate material that has been subjected to printing and optionally provided with a protective layer, which structure corresponds to the position of the print decoration, wherein the positioning of the substrate material in the short-cycle press is effected on the basis of the position data of the colour component key of the print decoration on the substrate material.

10. Apparatus according to Claim 9, **characterized by** at least one means for applying a protective layer to the substrate material provided with the respective print decoration.

## Revendications

1. Procédé d'utilisation multiple de données d'impression numériques pour générer des décorations d'impression de haute qualité optique et/ou haptique sur un matériau de support, ledit procédé comprenant les étapes suivantes
a) fournir au moins un motif d'impression ;
b) convertir l'au moins un motif d'impression en au moins un ensemble de données électronique à haute résolution dont la résolution va jusqu'à 2400 dpi, de préférence 1200 dpi, à l'aide d'au moins un logiciel de traitement d'images,
c) séparer numériquement l'information couleur contenue dans l'au moins un ensemble de données électronique en au moins quatre canaux de couleur, les au moins quatre canaux de couleur étant chacun associés aux composantes de couleur Cyan, Magenta, Jaune et Noir du système de couleur CMJN ou un jeu de couleurs modifié de celui-ci,
d) éventuellement, traiter indépendamment l'information couleur contenue dans un canal de couleur respectif ;
e) regrouper les informations couleur séparées fournies, notamment à l'étape c) ou éventuellement à l'étape d), pour former au moins un fichier d'impression numérique destiné à un décor d'impression à réaliser par le procédé d'impression numérique ;
f) créer au moins un décor d'impression sur un matériau de support à l'aide de l'au moins un fichier d'impression numérique avec au moins une imprimante numérique ;
le procédé comprenant en outre les étapes suivantes :
g) déterminer et mémoriser les données de position d'au moins la composante de couleur Noir séparée, fournie à l'étape c), lors de la génération du décor d'impression sur le matériau de support à l'étape f) ;
combiner les données de position au matériau de support imprimé à l'étape f), sur la base des données de position combinées de la composante de couleur Noir, des variations, précises en position, de l'aspect coloré et de la structure de surface qui sont conformes au décor imprimé,
la variation, précise en position, de l'aspect coloré étant effectuée à l'aide d'une imprimante numérique dans une ligne d'impression pour appliquer au moins une couleur particulière, et
les variations, précises en position, de la structure de surface étant effectuées à l'aide
- d'une imprimante numérique dans une ligne d'impression pour appliquer au moins une encre UV ou une encre aqueuse pour générer une structure négative et/ou positive qui correspond à la position du décor d'impression et/ou
- d'une presse à cycle court pour générer une structure, correspondant à la position du décor d'impression, du matériau de support imprimé et éventuellement pourvue d'une couche protectrice.

2. Procédé selon la revendication 1, **caractérisé en ce que** l'ensemble de données à haute résolution créé à l'étape b) est traité, notamment des modifications et/ou des ajustements relatifs au décor et/ou à la couleur sont effectués.

3. Procédé selon l'une des revendications précédentes, **caractérisé en ce que** l'au moins un fichier d'impression numérique créé à l'étape g) est converti dans un format utilisable pour l'impression numérique, notamment au moyen de RIP.

4. Procédé selon l'une des revendications précédentes, **caractérisé en ce que** l'application de l'au moins une couleur particulière ou de l'encre UV et/ou de l'encre aqueuse est effectuée avec une deuxième imprimante numérique, les données de position de la couleur Noir ayant été préalablement transmises de la première imprimante numérique à la deuxième imprimante numérique.

5. Procédé selon l'une des revendications précédentes, **caractérisé en ce que** l'au moins un matériau de support est choisi dans un groupe contenant du papier, du verre, du métal, des feuilles, des matériaux en bois, en particulier des panneaux MDF ou HDF, des panneaux WPC, des placages, des couches de laque, des panneaux de matière synthétique, des plaques de support HPL/CPL et minérales.

6. Procédé selon l'une des revendications précédentes, **caractérisé en ce que** le décor d'impression créé par impression numérique est imprimé sur des matériaux de support uniformément pré-apprêtés.

7. Procédé selon l'une des revendications précédentes, **caractérisé en ce qu'**une couche protectrice est appliquée sur le décor d'impression.

8. Procédé selon l'une des revendications précédentes, **caractérisé en ce que** le matériau de support imprimé, et éventuellement pourvu d'une couche protectrice, est transformé en formats plus petits au moyen d'un dispositif de découpe, et **en ce que** le positionnement du matériau de support destiné à la génération d'une image en coupe appropriée dans le dispositif de découpe est effectué sur la base des données de position de la couleur Noir du décor d'impression sur le matériau de support.

9. Dispositif de génération de décors d'impression de haute qualité optique et/ou haptique par utilisation multiple de données d'impression numérique,
ledit dispositif comprenant
- au moins un moyen destiné à convertir au moins un motif d'impression en au moins un ensemble de données électronique à haute résolution dont la résolution va jusqu'à 2400 dpi, de préférence 1200 dpi, et éventuellement destiné à traiter l'au moins un ensemble de données à haute résolution ;
- au moins un moyen destiné à séparer numériquement l'information couleur contenue dans l'au moins un ensemble de données électronique en au moins quatre canaux de couleur, les au moins quatre canaux de couleur étant associés chacun aux composantes de couleur Cyan, Magenta, Jaune et Noir du système de couleurs CMJN ou à un ensemble de couleurs modifié de celui-ci,
- au moins un moyen destiné à regrouper les informations couleur séparées des 4 canaux de couleur pour former au moins un fichier d'impression numérique,
- au moins une ligne d'impression comprenant au moins une imprimante numérique et destinée à créer un décor d'impression sur un matériau de support à l'aide de l'au moins un fichier d'impression numérique,
- au moins un moyen destiné à déterminer et mémoriser les données de position d'au moins une composante couleur lors de la génération du décor d'impression sur le matériau de support,
- au moins un moyen destiné à combiner les données de position au matériau de support imprimé ;
le dispositif comprenant en outre
- une deuxième imprimante numérique de la ligne d'impression, laquelle est destinée à appliquer au moins une encre UV ou une encre aqueuse pour générer une structure négative et/ou positive qui correspond à la position de la composante de couleur Noir du décor imprimé et/ou d'une couleur particulière sur la base des données de position de la composante de couleur Noir pour l'amélioration visuelle du décor d'impression, et/ou
- une presse à cycle court destinée à générer une structure, correspondant à la position du décor d'impression, du matériau de support imprimé et éventuellement pourvu d'une couche protectrice, le positionnement du matériau de support dans la presse à cycle court étant effectué sur la base des données de position de la composante de couleur Noir du décor d'impression sur le support.

10. Dispositif selon la revendication 9, **caractérisé par** au moins un moyen destiné à appliquer une couche protectrice sur le matériau de support pourvu du décor d'impression respectif.
